# EUROPÄISCHE PATENTSCHRIFT

(11) **EP 2 143 398 B1**
(45) Veröffentlichungstag und Bekanntmachung des Hinweises auf die Patenterteilung: **05.12.2012**
(21) Anmeldenummer: 08012639.4
(22) Anmeldetag: 12.07.2008
(51) Int. Cl.: A61C 8/00

(54) **Zahnimplantat mit elastischem Zwischenelement**
Dental implant with elastic intermediate element
Implant dentaire avec élément intermédiaire élastique

(43) Veröffentlichungstag der Anmeldung: 13.01.2010
(73) Patentinhaber: Walther, Gerd Axel, Dr., 71034 Böblingen (DE)
(72) Erfinder: Walther, Gerd Axel, Dr., 71034 Böblingen (DE)
(74) Vertreter: Kocher, Mark Werner

(56) Entgegenhaltungen:
- EP-A- 0 370 590
- WO-A-85/02337
- CH-A5- 696 625
- DE-A1- 4 041 378
- DE-A1- 4 127 436
- GB-A- 2 063 680

## Beschreibung

Die Erfindung betrifft ein zweiteiliges Zahnimplantat, insbesondere aus einem Keramikmaterial, wie es beispielsweise in der DE 10 2005 006 979 A1 , oder der WO 00/54696 oder der CH 696625 beschrieben ist. Die Fixierung des Implantatpfostens in einer entsprechenden Halteaufnahme des Implantatkörpers erfolgt im einen Falle durch eine Schraubverbindung und im anderen Falle durch eine Renk- beziehungsweise Bajonettverbindung. Dabei liegt ein konischer Bereich des Halteabschnitts des Implantatpfostens an einem entsprechenden konischen Bereich der Halteaufnahme an.

Durch einen exakten Passsitz der beiden konischen Bereiche aneinander ist zwar eine feste und sichere Fixierung des Implantatpfostens im Implantatkörper prinzipiell gewährleistet, jedoch kann dieser intensive Kontakt der beiden konischen Wandungen aneinander zu einer Eigenhemmung führen, so dass sich der Implantatpfosten beziehungsweise das sich daran befindliche Aufbauteil beziehungsweise der sich daran befindende Zahnersatz nicht mehr exakt in die gewünschte Winkelposition bewegen lässt. Ein anderes Problem besteht darin, dass insbesondere bei ungenauer Passung der beiden konischen Bereiche aneinander bei festem Einpressen des Implantatpfostens in den Implantatkörper ein Brechen oder Reißen der Keramik die Folge sein kann.

Eine Aufgabe der vorliegenden Erfindung besteht darin, ein Zahnimplantat der eingangs genannten Gattung zu schaffen, bei dem sich der Implantatpfosten auch bei festem Eindrücken in den Implantatkörper noch winkelmäßig korrigieren lässt.

Diese Aufgabe wird erfindungsgemäß durch ein Zahnimplantat mit den Merkmalen des Anspruchs 1 gelöst.

Durch das elastische Zwischenelement oder die elastische Zwischenschicht zwischen den sich gegenüberstehenden konusförmigen Flächen der Halteaufnahme und des Halteabschnitts des Implantatpfostens ist selbst dann noch eine gewisse Drehung des Implantatpfostens möglich, wenn der Implantatpfosten bereits fest in die Halteaufnahme eingedrückt oder eingepresst ist. Das Aufbauteil beziehungsweise der Zahnersatz kann dadurch noch in die gewünschte beziehungsweise optimale Position gedreht werden, beziehungsweise die Winkelposition kann noch verändert werden. Darüber hinaus wirkt das elastische Zwischenelement beziehungsweise die elastische Zwischenschicht als Schutzschicht für die sich gegenüberstehenden konusförmigen Flächen und verhindert insbesondere bei einer Keramikausführung ein Brechen des Keramikmaterials, insbesondere des Implantatkörpers, infolge mechanischer Spannungen, die z.B. im Hinblick au Fertigungstoleranzen der sich gegenüberstehenden konusförmigen Flächen auftreten können.

Zur Fixierung des Implantatpfostens in der Halteaufnahme des Implantatkörpers wird erfindungsgemäß eine Renkverbindung verwendet.

Durch die in den Unteransprüchen aufgeführten Maßnahmen sind vorteilhafte Weiterbildungen und Verbesserungen des im Anspruch 1 angegebenen Zahnimplantats möglich.

Das Zwischenelement oder die Zwischenschicht können zweckmäßigerweise am Halteabschnitt und/oder an der Halteaufnahme angeordnet sein.

In einer vorteilhaften Ausbildung der Erfindung verjüngt sich auch der Tragabschnitt des Implantatpfostens wenigstens in einem Teilbereich konusförmig zum freien Ende hin und ist in einer entsprechenden Tragaufnahme eines Zahnersatzes oder eines den Zahnersatz tragenden Tragelements fixiert. Auch hier erweist es sich aus denselben Gründen als vorteilhaft, zwischen den sich im eingesetzten Zustand gegenüberstehenden konusförmigen Flächen der Tragaufnahme und des Tragabschnitts ein elastisches Zwischenelement oder eine elastische Zwischenschicht anzuordnen. Auch dieses Zwischenelement oder die Zwischenschicht kann am Tragabschnitt und/oder an der Tragaufnahme angeordnet oder durch eine eingebrachte, z.B. eingespritzte Kunststoffmasse gebildet sein.

Das Zwischenelement oder die Zwischenschicht besteht zweckmäßigerweise aus einem Kunststoffmaterial und/oder ist strukturiert beispielsweise in Form eines Gewebes oder Geflechts oder einer Lamellierung.

Zur Verankerung im Kiefer besitzt der Implantatkörper ein Außengewinde, vorzugsweise ein konisches und/oder selbstschneidendes Außengewinde, mit Hilfe dessen der Implantatkörper in eine entsprechende Bohrung im Kiefer eingeschraubt werden kann.

Das Zahnimplantat besteht in vorteilhafter Weise wenigstens zum Teil aus einem Keramikmaterial auf der Basis von Zirkonoxid oder einer Zirkonoxid/Aluminiumoxid-Mischung oder aus einem anderen, nichtmetallischen Material, zum Beispiel einem faserverstärkten Kunststoff auf Karbonbasis. Dabei besteht vorzugsweise wenigstens die ganz oder teilweise aus dem Kieferknochen herausragenden Bestandteile aus dem Keramikmaterial oder nichtmetallischen Material.

Ein Ausführungsbeispiel der Erfindung ist in den Figuren 1 bis 3 dargestellt und in der nachfolgenden Beschreibung näher erläutert. Es zeigen:
- Figur 1: eine perspektivische Explosionsdarstellung des aus Implantatkörper, Implantatpfosten und Tragelement bestehenden Zahnimplantats als erstes Ausführungsbeispiel der Erfindung,
- Figur 2: eine Draufsicht auf das zusammengefügte Zahnimplantat gemäß Figur 1,
- Figur 3: eine Schnittdarstellung des in den Figuren 1 und 2 dargestellten zusammengefügten Zahnimplantats gemäß der Schnittlinie B-B in Figur 2 und
- Figur 4: eine Schnittdarstellung eines aus Implantatkörper und Implantatpfosten bestehenden zusammengefügten Zahnimplantats, das nicht beansprucht ist.

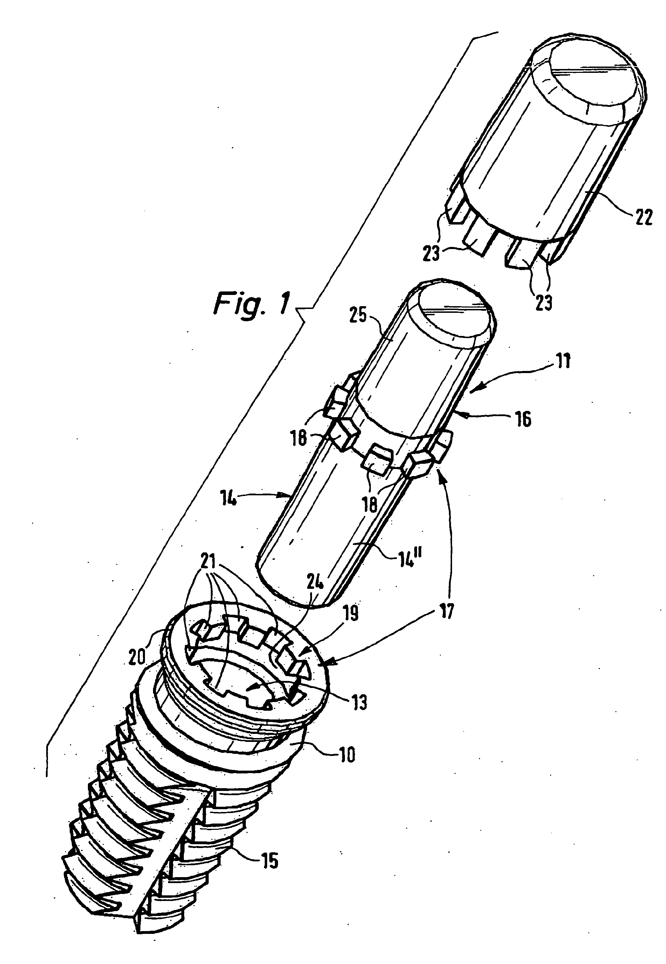

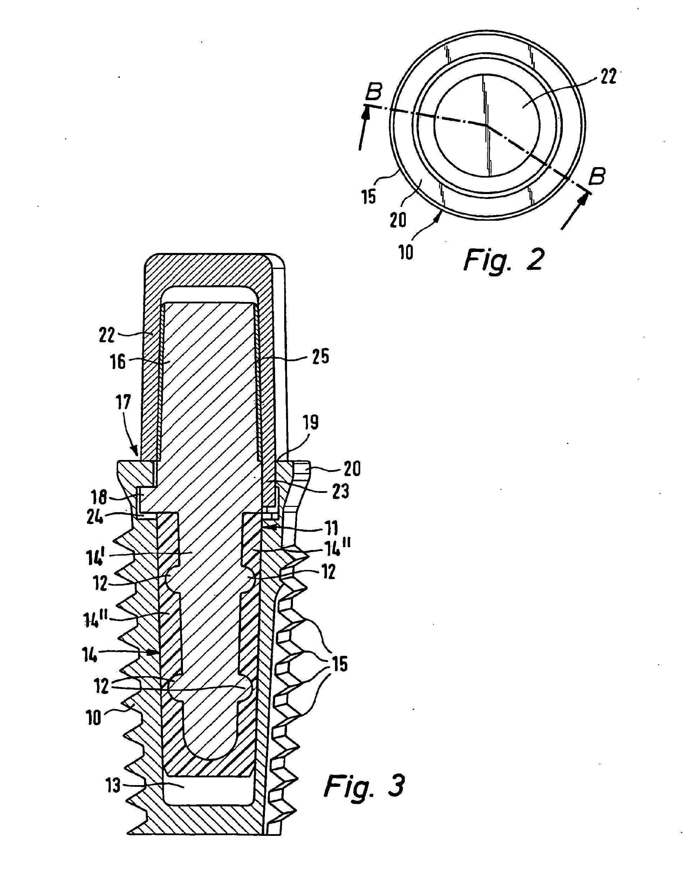

Das in den Figuren 1 bis 3 als erstes Ausführungsbeispiel dargestellte Zahnimplantat besteht aus einem in den menschlichen Kieferknochen einsetzbaren beziehungsweise einschraubbaren Implantatkörper 10, einem in diesem Implantatkörper 10 verrastbaren Implantatpfosten 11 und einem auf den Implantatpfosten 11 aufsetzbaren, mit einem nicht dargestellten zu verankernden festsitzenden Zahnersatz, wie einer Einzelkrone, einem Brückpfeiler oder dergleichen, versehenen Tragelement 22. Diese Bestandteile bestehen ganz oder zum Teil aus einem Keramikmaterial auf der Basis von Zirkonoxid oder einer Zirkonoxid/Aluminiumoxid-Mischung. Die aus dem Kieferknochen ganz oder teilweise herausragenden Bestandteile, insbesondere der Implantatpfosten 11 und das noch zu beschreibende Tragelement 22, bestehen dabei bevorzugt aus dem Keramikmaterial oder einem nichtmetallischen Material, zum Beispiel einem faserverstärkten Kunststoff auf Karbonbasis, nicht zuletzt auch aus optischen und ästhetischen Gründen, während der im Kieferknochen verankerte Implantatkörper 10 auch aus einem Metall, wie zum Beispiel Titan, bestehen kann. Prinzipiell könnte zwar auch das gesamte Zahnimplantat aus Metall bestehen, jedoch ist eine Ausführung aus einem Keramikmaterial zu bevorzugen, insbesondere auch im Hinblick auf die beschriebenen Vorteile der erfindungsgemäßen Lösung.

Der Implantatkörper 10 besitzt ein sich konisch zum Inneren hin verjüngendes Sackloch 13 zur Aufnahme eines sich entsprechend verjüngenden Halteabschnitts 14 des Implantatpfostens 11. Dieser Halteabschnitt 14 besteht aus einem einstückig mit einem Tragabschnitt 16 des Implantatpfostens 11 verbundenen Kernbereich 14', auf den ein aus einem elastischen Material gebildetes Zwischenelement 14" aufgesetzt, beziehungsweise aufgestülpt oder angespritzt ist. Zur Fixierung des Zwischenelements 14'' am Kernbereich 14' besitzt der Kernbereich 14' zwei Ringwülste 12, die in entsprechende Ringnuten des Zwischenelements 14'' eingreifen. Alternativ hierzu kann das Zwischenelement 14'' auch auf andere bekannte Weise am Kernbereich 14' fixiert sein, beispielsweise durch Verkleben oder andere formschlüssige Verbindungselemente oder Verbindungsbereiche. Der Kernbereich 14' ist ebenfalls in der Einsteckrichtung des Halteabschnitts 14 konisch verjüngt, jedoch ist dies nicht zwingend, so dass beispielsweise auch eine zylindrische Form oder eine kantige Form prinzipiell möglich ist.

Umfangsseitig ist der Implantatkörper 10 mit einem konischen und/oder selbstschneidenden Außengewinde 15 versehen, das zum Einschrauben in eine Kieferbohrung dient. Anstelle eines Außengewindes 15 kann prinzipiell auch eine andere bekannte Außenstruktur zur Verankerung im Kieferknochen dienen.

Der mit dem Kernbereich 14' des Halteabschnitts 14 einstückig verbundene Tragabschnitt 16 des Implantatpfostens 11 ragt bei im Implantatkörper 10 eingesetztem Implantatpfosten 11 aus dem Implantatkörper 10 heraus und dient zur Halterung eines festsitzenden Zahnersatzes. Auch der Tragabschnitt 16 verjüngt sich zum freien Ende hin konusförmig, wie dies auch beim Halteabschnitt 14 der Fall ist, und ragt in eine entsprechend geformte konusförmige Aufnahme eines Kopplungsglieds 22 hinein, das später in seiner Funktion noch näher beschrieben wird. Der Tragabschnitt 16 trägt an seiner Außenfläche eine elastische Zwischenschicht 25 aus einem Kunststoffmaterial oder einem anderen elastischen Material.

Das Zwischenelement 14'' und die Zwischenschicht 25 können anstelle aus einem elastischen Kunststoffmaterial auch aus einem anderen elastischen Material bestehen und beispielsweise auch als elastisches Gewebe oder Geflecht oder lamellierte Struktur ausgebildet sein. Weiterhin kann anstelle des dargestellten Ausführungsbeispiels auch der Halteabschnitt 14 mit einer Zwischenschicht beziehungsweise der Tragabschnitt 16 mit einem Zwischenelement versehen sein. Alternativ hierzu ist es auch möglich, eine Zwischenschicht an der Innenwandung des Sacklochs 13 beziehungsweise der sacklochförmigen Aufnahme des Kopplungsglieds 22 anzubringen. Hierbei sind alle denkbaren Kombinationen möglich, wobei auch beispielsweise beide sich gegenüberstehenden konusförmigen Flächen mit Zwischenelementen beziehungsweise Zwischenschichten versehen sein können, oder eine elastische Kunststoffmasse wird zwischen diese konusförmigen Flächen gebracht, z.B. eingespritzt oder eingefüllt.

Im Falle des Tragabschnitts 16 und des Kopplungsglieds 22 kann dort auch vollständig auf eine elastische Zwischenlage bei einer einfacheren Ausführung verzichtet werden. Weiterhin können anstelle der Konusgestalt auch andere Geometrien treten, wie zylindrische oder nichtrotationssymmetrische oder mehrkantige Geometrien.

Zur Fixierung des Implantatpfostens 11 im Implantatkörper 10 dient eine als Steck-Drehverbindung ausgebildete Renkverbindung 17, zum Beispiel eine Bajonettverbindung. Hierzu besitzt der Implantatpfosten 11 etwa mittig einen Kranz von radial abstehenden Verriegelungszähnen 18, während am offenen Endbereich des Implantatkörpers 10 eine Komplementärkontur 19 an einem Abschlussflansch 20 angeordnet ist, die entsprechende nutartige Durchsteckausnehmungen 21 besitzt. Zur gegenseitigen Verriegelung wird der Implantatpfosten 11 so in den Implantatkörper 10 eingeführt, dass die Verriegelungszähne 18 durch die Durchsteckausnehmungen 21 der Komplementärkontur 19 hindurchgeführt werden. Anschließend wird der Implantatpfosten 11 um einen Winkel gedreht, der im Wesentlichen der Winkelbreite eines Verriegelungszahns 18 entspricht. Hierdurch gelangen die Verriegelungszähne 18 hinter die Komplementärkontur 19, wobei der konusförmige Halteabschnitt 14 in Verbindung mit dem entsprechend gestalteten Sackloch 13 im Implantatkörper 10, den Verriegelungszähnen 18 und der Komplementärkontur 19 so geformt ist, dass bei dieser Drehung der Verriegelungszähne 18 in einer Ringnut 24 unmittelbar hinter der Komplementärkontur 19 eine Verklemmung stattfindet, das heißt, der Halteabschnitt 14 des Implantatpfostens 11 wird dabei in das Sackloch 13 eingedrückt und verklemmt sich dadurch. Dies wird durch das Zwischenelement 14'' unterstützt, durch das auch bei schon einsetzender Verklemmung eine Drehung noch weiterhin möglich ist. Darüber hinaus dient das Zwischenelement 14'' als Schutzschicht zwischen dem Kernbereich 14' des Haltabschnitts 14 und dem Implantatkörper 10 und verhindert insbesondere bei einer Ausbildung aus Keramikmaterial bei auftretenden Spannungen ein Brechen oder Reißen insbesondere des Implantatkörpers 10.

Beim dargestellten Ausführungsbeispiel sind acht gleichmäßig über den Umfang des Implantatpfostens 11 verteilte Verriegelungszähne 18 und eine entsprechende Anzahl von Durchsteckausnehmungen 21 vorgesehen. Diese Zahl kann natürlich variieren. Im einfachsten Fall genügt ein einziger Verriegelungszahn 18 und eine einzige Durchsteckausnehmung 21. Besser ist jedoch eine größere Zahl von Verriegelungszähnen 18, die zweckmäßigerweise gleichmäßig über den Umfang verteilt sein sollten. Weiterhin können die Verriegelungszähne 18, die Durchsteckausnehmungen 21 und die Ringnut 24 auch eine von der rechteckigen beziehungsweise quaderförmigen Gestalt oder Querschnittsgestalt abweichende Geometrie besitzen und zum Beispiel auch halbrund, dreieckig, elliptisch oder dergleichen ausgebildet sein.

Beim dargestellten Ausführungsbeispiel ist die Renkverbindung 17 am offenen Endbereich des Implantatkörpers 10 beziehungsweise am vom freien Endbereich abgewandten Endbereich des Halteabschnitts 14 des Implantatpfostens 11 angeordnet. Dabei ist es prinzipiell auch möglich, die Verriegelungszähne 18 an einer anderen Stelle des Halteabschnitts 14 anzuordnen, so dass die Renkverbindung 17 weiter im Inneren des Implantatkörpers 10 angeordnet ist.

Das topfartig geformte Kopplungsglied 22 wird im Zahnlabor mit einem festsitzenden, nicht dargestellten Zahnersatz versehen oder in einen solchen eingesetzt und verankert, beispielsweise in eine Einzelkrone, einen Brückenpfeiler oder dergleichen. Das mit dem Zahnersatz versehene Kopplungsglied 22 wird dann auf den konusförmigen Tragabschnitt 16 des Implantatpfostens 11 aufgesetzt, so dass dieser Tragabschnitt 16 in die entsprechend geformte Ausnehmung des Kopplungsglieds 22 eingreift. Vom Rand des offenen Endes des Kopplungsglieds 22 aus erstrecken sich zapfenartige Vorsprünge 23 in axialer Richtung, die so geformt und angeordnet sind, dass sie in die Durchsteckausnehmungen 21 der Komplementärkontur 19 eingesteckt werden können. Ihre Länge ist so bemessen, dass sie noch zwischen die Verriegelungszähne 18 des Implantatpfostens 11 eingreifen und dadurch eine Drehung oder Rückdrehung des Implantatpfostens 11 blockieren. Der Implantatpfosten 11 ist dadurch sowohl in axialer Richtung als auch in Drehrichtung verriegelt.

Zur Anbringung beziehungsweise Montage des Zahnimplantats wird zunächst der Implantatkörper 10 mittels des Außengewindes 15 in an sich bekannter Weise in eine Bohrung im Kieferknochen eingeschraubt und dadurch verankert. Bis zur Anfertigung des festsitzenden Zahnersatzes wird der Implantatkörper 10 dann durch Einstecken und Drehen des Implantatpfostens 11 verschlossen, wobei bei Bedarf alternativ oder zusätzlich auch noch eine Abdeckkappe vorgesehen sein kann. Weiterhin kann danach noch ein entsprechend angepasster Gingivaformer und eventuell auch noch ein Provisorium eingesetzt beziehungsweise angebracht werden. Nach Anfertigung des endgültigen Zahnersatzes, in dem das Kopplungsglied 22 verankert ist, wird dieser mittels des Kopplungsglieds 22 auf den Implantatpfosten 11 so aufgesteckt, dass die zapfenartigen Vorsprünge 23 die Durchsteckausnehmungen 21 passieren und zwischen den Verriegelungszähnen 18 positioniert werden, um den Implantatpfosten 11 zu verriegeln. Der konusförmige Tragabschnitt 16 des Implantatpfostens 11 tritt dabei in innigen Kontakt mit der entsprechenden Ausnehmung des Kopplungsglieds 22 über die Zwischenschicht 25, wobei die Verankerung in an sich bekannter Weise durch Verkleben oder Zementieren mit üblichen Haftmitteln erfolgen kann, oder es wird eine axiale oder radiale Schraub- oder Bolzenfixierung vorgenommen. Im Falle der Fixierung durch Verkleben oder Zementieren kann die Zwischenschicht 25 auch entfallen.

In einer einfacheren Ausführung kann das Kopplungsglied 22 auch entfallen. Der Zahnersatz selbst wird dann mit einer entsprechenden Aufnahme zum Einsetzen des Tragabschnitts 16 versehen.

In Abwandlung des dargestellten Ausführungsbeispiels kann der Implantatpfosten auch abgewinkelt ausgeführt sein, das heißt, die Längsachse seines Halteabschnitts ist gegenüber der Längsachse seines Tragabschnitts um einen jeweils zur Anpassung der Lage des Zahnersatzes erforderlichen Winkel versetzt. Bei einer solchen Ausführung ist eine große Zahl von Verriegelungszähnen 18 von Vorteil, um die Positionierung vielseitiger und variabler vornehmen zu können.

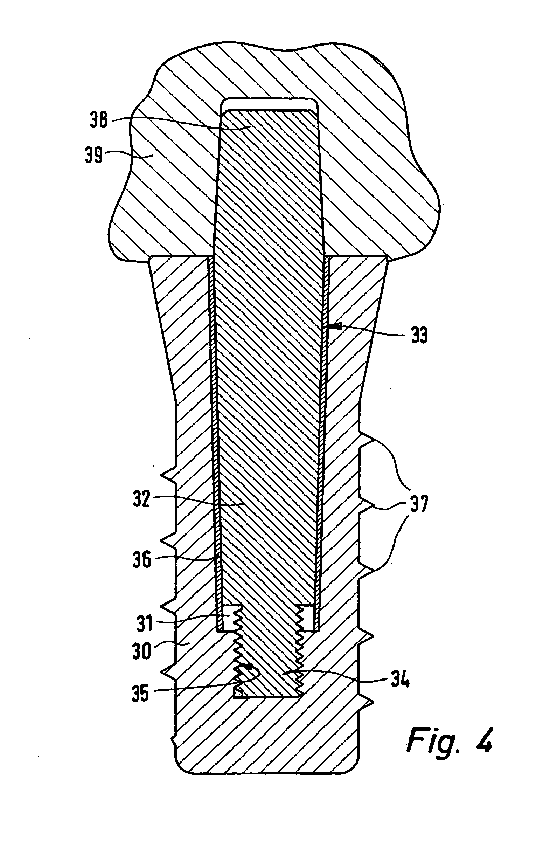

Bei dem in Figur 4 dargestellten, nicht zur Erfindung gehörigen Ausführungsbeispiel besitzt ein Implantatkörper 30 ebenfalls ein Sackloch 31, das sich zum Bodenbereich hin konusförmig verjüngt. Es dient wiederum zur Aufnahme des entsprechend geformten, konusförmig sich verjüngenden Halteabschnitts 32 eines Implantatpfostens 33. Der Halteabschnitt 32 ist an seinem dem Boden des Sacklochs 31 zugewandten Ende mit einem Schraubgewindebereich 34 versehen, mit dessen Hilfe der Implantatpfosten 33 in ein Gewindeloch 35 im Boden des Sacklochs 31 eingeschraubt werden kann. Die Innenwandung des Sacklochs 31 ist mit einer elastischen Zwischenschicht 36 versehen. Beim Einschrauben des Implantatpfostens 33 pressen sich die beiden konusförmig sich verjüngenden Flächen des Halteabschnitts 32 und des Sacklochs 31 über die Zwischenschicht 36 zusammen, so dass eine sichere Fixierung erreicht wird, wobei zur Positionierung des Zahnersatzes immer noch eine gewisse Drehung beziehungsweise Drehwinkeloptimierung möglich ist.

Am Außenumfang des Implantatkörpers 30 ist wie beim ersten Ausführungsbeispiel ein Außengewinde 37 angeordnet, das zum Einschrauben des Implantatkörpers 30 in den Kieferknochen dient.

Dem Halteabschnitt 32 des Implantatpfostens 33 fügt sich einstückig ein Tragabschnitt 38 an, der aus dem Implantatkörper 10 im eingesetzten Zustand herausragt und zur Halterung eines festsitzenden Zahnersatzes 39 dient. Auch dieser Tragabschnitt 38 verjüngt sich zum freien Ende hin konusförmig und greift in eine entsprechende Ausnehmung des Zahnersatzes 39 ein. Auch hier kann ein Kopplungsglied dazwischen angeordnet sein. Die Fixierung erfolgt gemäß dem ersten, erfindungsgemä-βen Ausführungsbeispiel.

In Abwandlung des in Figur 4 dargestellten, nicht zur Erfindung gehörigen Ausführungsbeispiels kann auch dort anstelle der Zwischenschicht 36 an der Innenwandung des Sacklochs 31 eine solche Zwischenschicht 36 oder ein Zwischenelement am Halteabschnitt 32 und eventuell auch am Tragabschnitt 38 gemäß dem ersten Ausführungsbeispiel angebracht sein. Weiterhin kann auch eine elastische Kunststoffmasse zwischen die konusförmigen Flächen, also zwischen die Innenwandung des Sacklochs 31 und den Halteabschnitt 32 gebracht, insbesondere eingefüllt oder eingespritzt werden. Diese Kunststoffmasse kann sich auch noch in den Schraubgewindebereich 34 hinein erstrecken, um diesen elastisch im Gewindeloch 35 zu halten. Hierzu wird man vorzugsweise ein großes Gewindespiel vorsehen.

## Patentansprüche

1. Zahnimplantat, insbesondere aus einem Keramikmaterial,
mit einem Implantatkörper (10) zum Verankern in einem Kieferknochen und mit einem in eine Halteaufnahme (13) des Implantatkörpers (10) einsetzbaren und fixierbaren Implantatpfosten (11), dessen aus dem Implantatkörper (10) herausstehender Tragabschnitt (16) zum Befestigen eines Zahnersatzes ausgebildet ist, und dessen in der Halteaufnahme (13) fixierbarer Halteabschnitt (14) sowie diese Halteaufnahme (13) jeweils wenigstens in einem Teilbereich in der Einsteckrichtung einander entsprechend konusförmig verjüngt sind, wobei wenigstens eine der sich im eingesetzten Zustand kontaktierenden, konusförmig sich verjüngenden Flächen der Halteaufnahme (13) und des Halteabschnitts (14) des Implantatpfostens (11) durch ein elastisches Zwischenelement (14") oder eine elastische Zwischenschicht gebildet wird, **dadurch gekennzeichnet, dass** zur Fixierung des Implantatpfostens (11) in der Halteaufnahme (13) des Implantatkörpers (10) eine als Steck-Drehverbindung ausgebildete
Renkverbindung (17) vorgesehen ist, wobei der Halteabschnitt (14) des Implantatpfostens (11) in ein Sackloch der Halteaufnahme (13) gedrückt wird und sich bei einer Drehung verklemmt.

2. Zahnimplantat nach Anspruch 1, **dadurch gekennzeichnet, dass** das Zwischenelement (14'') oder die Zwischenschicht am Halteabschnitt (14) und/oder an der Halteaufnahme (13) angeordnet ist oder einen Bereich des Halteabschnitts (14) und/oder der Halteaufnahme (13) bildet.

3. Zahnimplantat nach Anspruch 1, **dadurch gekennzeichnet, dass** die Zwischenschicht durch eine Kunststoffmasse gebildet wird.

4. Zahnimplantat nach einem der vorhergehenden Ansprüche, **dadurch gekennzeichnet, dass** sich der Tragabschnitt (16) des Implantatpfostens (11) ebenfalls zum freien Ende hin wenigstens in einem Teilbereich konusförmig verjüngt und in einer entsprechenden Tragaufnahme eines Zahnersatzes oder eines den Zahnersatz tragenden Tragelements (22) fixiert ist.

5. Zahnimplantat nach Anspruch 4, **dadurch gekennzeichnet, dass** wenigstens eine der sich im eingesteckten Zustand kontaktierenden, konusförmig sich verjüngenden Flächen der Tragaufnahme und des Tragabschnitts (16) des Implantatpfostens (11) durch ein elastisches Zwischenelement oder eine elastische Zwischenschicht (25) gebildet wird.

6. Zahnimplantat nach Anspruch 5, **dadurch gekennzeichnet, dass** das Zwischenelement oder die Zwischenschicht (25) am Tragabschnitt (16) und/oder an der entsprechenden Tragaufnahme angeordnet ist oder durch eine eingebrachte Kunststoffmasse gebildet wird.

7. Zahnimplantat nach einem der vorhergehenden Ansprüche, **dadurch gekennzeichnet, dass** das Zwischenelement (14") und/oder die Zwischenschicht (25) aus einem Kunststoffmaterial besteht und/oder strukturiert ist.

8. Zahnimplantat nach Anspruch 7, **dadurch gekennzeichnet, dass** das strukturierte Zwischenelement oder die strukturierte Zwischenschicht als Gewebe oder Geflecht oder lamelliert ausgebildet ist.

9. Zahnimplantat nach einem der vorhergehenden Ansprüche, **dadurch gekennzeichnet, dass** das Zwischenelement (14'') an einem Kernbereich (14') des Halteabschnitts (14) oder Tragabschnitts aufgesteckt oder angeformt ist.

10. Zahnimplantat nach einem der vorhergehenden Ansprüche, **dadurch gekennzeichnet, dass** der Implantatkörper (10) ein Au-βengewinde (15) besitzt, vorzugsweise ein konisches und/oder selbstschneidendes Außengewinde.

11. Zahnimplantat nach einem der vorhergehenden Ansprüche, bestehend teilweise aus einem Keramikmaterial auf der Basis von Zirkonoxid oder einer Zirkonoxid/Aluminiumoxid-Mischung oder einem anderen, nichtmetallischen Material, wobei vorzugsweise wenigstens die ganz oder teilweise aus dem Kieferknochen herausragenden Bestandteile aus dem Keramikmaterial oder nichtmetallischen Material bestehen.

## Claims

1. Dental implant, in particular made of ceramic material, with an implant body (10) for anchoring in a jawbone and with an implant post (11) which may be inserted and fixed in a retaining seat (13) of the implant body (10) and which has a support section (16) extending outwards from the implant body (10) for the mounting of a denture, and with a retaining section (14) which may be fixed in the retaining seat (13) and which together with the retaining seat (13) is tapered conically in the direction of pushing-in, at least in one section, wherein at least one of the conically tapering surfaces of the retaining seat (13) and the retaining section (14) of the implant post (11) making contact in the pushed-in state is formed by an elastic intermediate element (14") or an elastic intermediate layer, **characterised in that** a bayonet connection (17) in the form of a push and twist connection is provided for fixing the implant post (11) in the retaining seat (13) of the implant body (10), wherein the retaining section (14) of the implant post (11) is pressed into a blind hole of the retaining seat (13) and becomes wedged when rotated.

2. Dental implant according to claim 1, **characterised in that** the intermediate element (14") or the intermediate layer is located on the retaining section (14) and/or the retaining seat (13) or forms an area of the retaining section (14) and/or the retaining seat (13).

3. Dental implant according to claim 1, **characterised in that** the intermediate layer is formed by a plastic compound.

4. Dental implant according to any of the preceding claims, **characterised in that** the support section (16) of the implant post (11) also tapers conically towards the free end in at least one section and is fixed in a corresponding supporting seat of a denture or a supporting element (22) carrying the denture.

5. Dental implant according to claim 4, **characterised in that** at least one of the conically tapering surfaces of the supporting seat and the support section (16) of the implant post (11), which make contact in the pushed-in state, are formed by an elastic intermediate element or an elastic intermediate layer (25).

6. Dental implant according to claim 5, **characterised in that** the intermediate element or the intermediate layer (25) is provided on the support section (16) and/or the corresponding supporting seat or is formed by an incorporated plastic compound.

7. Dental implant according to any of the preceding claims, **characterised in that** the intermediate element (14") and/or the intermediate layer (25) are/is comprised and/or structured from a plastic material.

8. Dental implant according to claim 7, **characterised in that** the structured intermediate element or the structured intermediate layer is in the form of a fabric or a mesh or is laminated.

9. Dental implant according to any of the preceding claims, **characterised in that** the intermediate element (14") is put or moulded on to a core area (14') of the retaining section (14) or support section.

10. Dental implant according to any of the preceding claims, **characterised in that** the implant body (10) has an external thread (15), preferably a conical and/or self-tapping external thread.

11. Dental implant according to any of the preceding claims, comprised partly of a ceramic material based on zirconium oxide or a zirconium oxide/aluminium oxide blend or another non-metallic material, wherein preferably at least those parts protruding wholly or partly out of the jawbone are made of the ceramic material or non-metallic material.

## Revendications

1. Implant dentaire, en particulier en un matériau céramique, comportant un corps d'implant (10) destiné à être ancré dans un os de la mâchoire et comportant un pivot d'implant (11) pouvant être inséré dans un logement de maintien (13) du corps d'implant (10) et y être fixé, dont la section de support (16) faisant saillie hors du corps d'implant (10) est réalisée afin de fixer une prothèse dentaire et dont la section de maintien (14) pouvant être fixée dans le logement de maintien (13) ainsi que ledit logement de maintien (13) se rétrécissent respectivement de manière à présenter une forme conique, au moins dans une zone partielle dans la direction de l'insertion de manière correspondante, sachant qu'au moins une des surfaces du logement de maintien (13) et de la section de maintien (14) du pivot d'implant (11), lesquelles surfaces viennent en contact à l'état inséré, se rétrécissent de manière à présenter une forme conique, est formée par un élément intermédiaire (14") élastique ou une couche intermédiaire élastique, **caractérisé en ce qu'**est prévue une douille à baïonnette (17) réalisée en tant que dispositif d'assemblage par rotation - emboîtement afin de fixer le pivot d'implant (11) dans le logement de maintien (13) du corps d'implant (10), sachant que la section de maintien (14) du pivot d'implant (11) est pressée dans un trou borgne du logement de maintien (13) et s'y coince lors d'une rotation.

2. Implant dentaire selon la revendication 1, **caractérisé en ce que** l'élément intermédiaire (14") ou la couche intermédiaire est disposé(e) au niveau de la section de maintien (14) et/ou au niveau du logement de maintien (13) ou forme une zone de la section de maintien (14) et/ou du logement de maintien (13).

3. Implant dentaire selon la revendication 1, **caractérisé en ce que** la couche intermédiaire est formée par une masse en plastique.

4. Implant dentaire selon l'une quelconque des revendications précédentes, **caractérisé en ce que** la section de support (16) du pivot d'implant (11) se rétrécit également au moins dans une zone partielle de manière à présenter une forme conique en direction de l'extrémité libre et est fixée dans un logement de support correspondant d'une prothèse dentaire ou d'un élément de support (22) supportant la prothèse dentaire.

5. Implant dentaire selon la revendication 4, **caractérisé en ce qu'**au moins une des surfaces du logement de support et de la section de support (16) du pivot d'implant (11), lesquelles surfaces viennent en contact à l'état inséré et se rétrécissent de manière à présenter une forme conique, est formée par un élément intermédiaire élastique ou par une couche intermédiaire (25) élastique.

6. Implant dentaire selon la revendication 5, **caractérisé en ce que** l'élément intermédiaire ou la couche intermédiaire (25) est disposé(e) au niveau de la section de support (16) et/ou au niveau du logement de support correspondant ou est formé(e) par une masse en plastique insérée.

7. Implant dentaire selon l'une quelconque des revendications précédentes, **caractérisé en ce que** l'élément intermédiaire (14") et/ou la couche intermédiaire (25) est constitué(e) d'une matière plastique et/ou est structuré(e).

8. Implant dentaire selon la revendication 7, **caractérisé en ce que** l'élément intermédiaire structuré ou la couche intermédiaire structurée est réalisé(e) comme un tissu ou des fils tressés ou de manière lamellée.

9. Implant dentaire selon l'une quelconque des revendications précédentes, **caractérisé en ce que** l'élément intermédiaire (14") est enfilé ou formé sur une zone centrale (14') de la section de maintien (14) ou de la section de support.

10. Implant dentaire selon l'une quelconque des revendications précédentes, **caractérisé en ce que** le corps d'implant (10) présente un filetage extérieur (15), de préférence un filetage extérieur conique et/ou autotaraudeur.

11. Implant dentaire selon l'une quelconque des revendications précédentes, constitué en partie d'un matériau céramique à base d'oxyde de zirconium ou d'un mélange d'oxyde de zirconium et d'oxyde d'aluminium ou d'un autre matériau non métallique, sachant que de préférence au moins les composants faisant saillie complètement ou partiellement de l'os de la mâchoire sont constitués d'un matériau céramique ou d'un matériau non métallique.
